# DEMANDE DE BREVET EUROPEEN

(11) **EP 1 536 311 A1**
(43) Date de publication de la demande: **01.06.2005**
(21) Numéro de dépôt: 04292792.1
(22) Date de dépôt: 26.11.2004
(51) Int. Cl.: G06F 1/00

(54) **Système cryptographique haut débit à architecture modulaire**

(30) Priorité: 28.11.2003 FR 0313965
(71) Demandeur: BULL S.A., 78430 Louveciennes (FR)
(72) Inventeur: Le Quere, Patrick, 91140 Villebon sur Yvette (FR)
(74) Mandataire: Debay, Yves

(57) **Abrégé**

La présente invention concerne un système cryptographique (1) à architecture modulaire, caractérisé en ce qu'il comprend :
- des modules mémoires (3, 3', 3") permettant de stocker des informations portant sur des clés d'authentification, des données et des commandes, dont un module mémoire sécurisé (3') pour contenir les clés avec contrôle d'intégrité et fonction d'effacement d'urgence,
- différents types de modules algorithmiques (5, 5', 5") réalisant des fonctions de cryptographie du système cryptographique en exécutant les commandes stockées dans au moins un module mémoire (3, 3', 3"),
- des modules d'interface externe (4, 4', 4") permettant d'effectuer la liaison entre le système cryptographique (1) et des dispositifs extérieurs, par un bus d'entrée sortie standard ou propriétaire,
- un ensemble de contrôle (6) chargé de la supervision des différents modules algorithmiques et de la gestion des clés,
- un module d'interconnexion central (2) capable d'assurer des échanges sécurisés entre blocs.

## Description

La présente invention concerne un système cryptographique à architecture modulaire permettant l'implémentation matérielle de protocoles de sécurité à très haut débit et à fort niveau de sécurité. Le champ d'application de l'invention concerne les produits de sécurité de chiffrement haut débit utilisant des technologies de type FPGA ou ASIC.

Les processus de sécurisation de données par chiffrement / déchiffrement sont, à l'heure actuelle, devenus cruciaux, en raison de l'augmentation croissante des échanges de données de toute nature, d'une part, et de la banalisation de moyens informatiques très puissants, susceptibles de permettre à des individus peu scrupuleux des accès non autorisés à des données transitant en réseau, d'autre part. Afin de faire face à l'acuité des problèmes précités, les développements de solutions techniques ont, à l'heure actuelle, proposé des produits cryptographiques réalisés sous forme de circuits intégrés, de type ASIC ou FPGA par exemple. Chaque circuit de ce type est alors réalisé en vue d'une application bien déterminée, par exemple un traitement de protocole donné, et ne permet pas d'implémenter plusieurs types de protocoles. Cependant, ces composants ne peuvent pas pour le moment être implémentés dans un système cryptographique à architecture modulaire. En effet un des inconvénients de ces composants est que les informations portant sur l'architecture détaillée ne sont pas disponible et ne permettent pas d'implémenter l'architecture dans différents types de technologie. Les algorithmes de ces composants ne sont pas disponibles et ne permettent pas l'utilisation desdits composants dans des applications de protection des infrastructures critiques nationales et européennes. De plus, ces composants de type ASIC ou FPGA ne possèdent pas de partie à reprogrammer, permettant d'ajuster le protocole de chiffrage implémenté dans ledit composant suivant le type de communication utilisée. En outre, le niveau de sécurité de ces composants est souvent insuffisant, voire inexistant, lesdits composants ne possédant pas de séparation des flux de données claires et de données chiffrées. Ces composants ne sont pas capables de prendre en compte des contraintes telles que, avoir des mémoires de clés sécurisés, gérer les alarmes, effectuer des tests continus de bon fonctionnement. D'autres composants offrent des niveaux de sécurité plus élevés, comme les composants AIM de MOTOROLA. Cependant, ce sont de simples composants cryptographiques à débit moyen, inférieur à 100 Mbits/s, dont le niveau de performance n'est pas ajustable au débit demandé (par exemple 1 Gbits/s) et qui ne prennent pas en compte le traitement protocolaire. Un système cryptographique modulaire utilisant ces composants standards serait un produit cher et très volumineux pour lequel tout développement sur mesure d'une solution FPGA ou ASIC ne pourrait être envisagée. Enfin ces composants ne peuvent s'adapter à différents types d'interface externes (PCI, PCI Express, SPI,...) sans remise en cause de l'architecture globale.

La présente invention a pour but de pallier certains inconvénients de l'art antérieur en proposant un système cryptographique permettant de regrouper, dans une même architecture modulaire, l'ensemble des fonctions de cryptage et de protocole utilisées par chaque type d'application au sein d'au moins un composant spécifique.

Ce but est atteint par un système cryptographique à architecture modulaire, caractérisé en ce qu'il comprend :
- des modules mémoires permettant de stocker des informations portant sur des clés d'authentification, des données et des commandes, dont un module mémoire sécurisé pour contenir les clés avec contrôle d'intégrité et fonction d'effacement d'urgence,
- différents types de modules algorithmiques réalisant des fonctions de cryptographie du système cryptographique en exécutant les commandes stockées dans au moins un module mémoire,
- des modules d'interface externe permettant d'effectuer la liaison entre le système cryptographique et des dispositifs extérieurs, par des bus d'entrée sortie standard ou propriétaire,
- un module d'administration chargé de la supervision des différents modules algorithmiques et de la gestion des clés, permettant de surveiller les modules du système, d'envoyer des commandes de tests vers le module séquenceur et de recevoir des mots de statuts indiquant un défaut survenu dans le système cryptographie
- un module d'interconnexion central capable d'assurer des échanges sécurisé entre blocs, permettant de connecter entre eux, les modules algorithmiques, les modules mémoire, les modules d'interface externe, et un ensemble de contrôle,
Selon une autre particularité, l'ensemble de contrôle comprend :
- un module séquenceur réalisant des fonctions de distribution et d'ordonnancement de commandes en stockant lesdites commandes dans au moins un module mémoire, en lançant l'exécution des modules algorithmiques et des modules d'interface externe via un bloc de commandes et en recevant un mot de statuts indiquant la fin d'exécution desdits modules algorithmiques et modules d'interface externe,
- un module administrateur permettant de surveiller les modules du système, d'envoyer des commandes de tests vers le module séquenceur et de recevoir un mot de statuts indiquant un défaut survenu dans le système cryptographique,
- un module de surveillance et d'alarme relié au module administrateur permettant de traiter des anomalies en provenance des autres modules du système cryptographique et d'activer les fonctions de sécurités essentielles.

Selon une autre particularité, un module protocole est intégré ou non dans le système cryptographique, ledit module protocole étant relié au module d'interconnexion central ou à au moins un module d'interface externe, le dit module protocole permet d'implémenter un protocole de sécurité en envoyant des macro-commandes de cryptographie au module séquenceur.

Selon une autre particularité, les principaux modules maîtres du système cryptographique sont le module protocole, le module administrateur et certains modules d'interfaces externes, les principaux modules esclaves sont les modules mémoire et les principaux modules maîtres-esclaves sont le module séquenceur et certains modules d'interface externe.

Selon une autre particularité, chaque module algorithmique comprend un sous-module exécutant des commandes de chiffrement ou déchiffrement ou de génération de code d'authentification ou vérification de code d'authentification, et un sous-module d'entrée sortie comportant au moins une première interface, une deuxième interface et une troisième interface, la première interface étant reliée au bus interne du module d'interconnexion central pour la transmission de données, de clés et de commandes provenant des modules mémoire, la deuxième interface étant reliée par accès direct mémoire au module séquenceur pour recevoir un signal de lancement d'exécution d'une commande cryptographique et pour envoyer un mot de statuts indiquant la fin d'exécution de la commande cryptographique, la troisième interface étant reliée au module d'administration pour envoyer un mot de statuts indiquant qu'une anomalie est survenue lors de l'exécution d'une commande cryptographique.

Selon une autre particularité, le sous-module d'entrée sortie d'un module algorithmique comprend un registre d'adresses, une mémoire FIFO d'envoi de données, un mémoire FIFO de réception de données et un moyen de gestion de plusieurs files de commandes en mémoire permettant une gestion plus fine du parallélisme d'exécution des modules algorithmiques lesdits modules possédant des débits de transmission différents.

Selon une autre particularité, le système de cryptographie comprend au moins les modules mémoire suivant :
- un module mémoire de données claires contenant des données avant cryptage,
- un module mémoire de données cryptées contenant des données après cryptage,
- un module mémoire de commandes de chiffrement contenant les commandes correspondant aux modules algorithmiques de chiffrement et de génération de code d'authentification,
- un module mémoire de commandes de déchiffrement contenant les commandes correspondant aux modules algorithmiques de déchiffrement et de vérification de code d'authentification,
- un module mémoire sécurisé de clé contenant des clés utilisées par les modules algorithmiques de chiffrement et de génération de code d'authentification.

Selon une autre particularité, chaque module mémoire comprend un sous-module de stockage d'informations, et un sous-module d'entrée sortie, ledit sous-module d'entrée-sortie étant raccordé au bus interne du module d'interconnexion central par une interface de type esclave permettant une écriture et une lecture simple ou par paquets dans le module mémoire.

Selon une autre particularité, le sous-module d'entrée sortie d'un module mémoire est à interface simple port.

Selon une autre particularité, le sous-module d'entrée sortie d'un module mémoire est à interface double port permettant deux attachements au bus interne du module d'interconnexion central, un premier attachement dédié à la transmission des données claires et un deuxième attachement dédié à la transmission des données chiffrées.

Selon une autre particularité, le sous-module d'entrée sortie d'un module mémoire sécurisé comprend deux blocs logiques, un premier bloc de contrôle d'intégrité contrôlant à chaque accès à la mémoire une valeur d'intégrité associée à une clé, en cas d'erreur d'intégrité ledit bloc envoie vers le module de surveillance et d'alarme un mot de statuts précisant l'erreur et un deuxième bloc de remise à zéro effectuant un effacement complet de la mémoire par ré-écriture de toutes les adresses au moyen d'un compteur, l'effacement étant commandé par le module de surveillance et d'alarme lors de la réception d'un mot statut indiquant une erreur d'intégrité.

Selon une autre particularité, un module d'interface externe comprend un sous-module implémentant un protocole d'échange et un sous-module d'entrée sortie pouvant fonctionner soit en mode maître, soit en mode esclave, soit en mode maître-esclave suivant le mode du protocole d'échange, permettant ainsi au système cryptographique de pouvoir s'adapter à tout type de protocole de sécurité.

Selon une autre particularité, le module séquenceur comprend un moyen de distribution de commandes, ledit moyen permettant de décomposer en microcommandes chaque macro-commande cryptographique provenant du module protocole, chacune des microcommandes comprenant un algorithme cryptographique simple et de poster les microcommandes dans un module mémoire de commandes à destination des autres modules, ledit module séquenceur comprend une première interface de type maître reliée au module d'interconnexion central pour envoyer un mot de statuts de fin d'exécution vers le module protocole ou le module d'administration, une deuxième interface de type esclave reliée au module d'interconnexion central pour recevoir des macro-commandes envoyées par le module protocole ou des commandes de test envoyées par le module d'administration, et pour recevoir des mots de statuts, indiquant la fin d'exécution de commandes, envoyés par les modules algorithmiques et les modules d'interface externe, et une troisième interface en mode accès direct mémoire, reliée aux modules algorithmiques et aux modules d'interface externe pour lancer l'exécution desdits modules en leur envoyant un bloc de commandes, et le module séquenceur comprend un moyen d'ordonnancement des commandes permettant de lancer les modules algorithmiques et les modules d'interface externe dans un ordre défini.

Selon une autre particularité, le module administrateur comprend un processeur d'administration, des circuits périphériques, une mémoire interne contenant le programme exécuté par le processeur d'administration, une mémoire de test permettant de réaliser des commandes de test sur les modules algorithmiques ou les modules d'interface externe, une interface maître reliée au module d'interconnexion central permettant d'envoyer des commandes de tests au module séquenceur et de recevoir des mots de statuts indiquant des modules en défaut, une interface esclave permettant de recevoir des mots de statuts envoyés par le module séquenceur pour indiquer la fin d'une commande de test exécutée par un module algorithmique ou un module d'interface externe, et une liaison externe dédiée au passage des données sensibles venant de dispositifs extérieurs au système cryptographique.

Selon une autre particularité, le module administrateur initialise un module mémoire sécurisé de clé du système cryptographique au démarrage dudit système cryptographique, lit des clés chiffrées dans une mémoire d'un dispositif externe ou à travers une liaison externe dédiée, puis déchiffre lesdits clés chiffrées et les écrit dans le module mémoire sécurisé de clé du système cryptographique.

Selon une autre particularité, le module d'interconnexion central comprend une série de multiplexeurs de données et d'adresses permettant aux modules du système cryptographique d'accéder à d'autres modules du dit système, des sous-modules d'arbitrage évitant des conflits d'accès simultanés entre modules et des mécanismes de sécurité garantissant les droits d'accès entre modules, les accès dudit module d'interconnexion central s'effectuant concurremment pour l'ensemble des modules du système cryptographique.

Selon une autre particularité, le module d'interconnexion central garantit l'accès en lecture des modules algorithmiques de chiffrement et de génération de code d'authentification vers un module mémoire sécurisé de clé, par vérification d'un mot de contrôle représentatif de l'utilisation de chaque clé, et dès la détection d'une erreur le module d'interconnexion central envoie un mot d'erreur au module de surveillance et d'alarme.

Selon une autre particularité, un bloc de commandes envoyé par le module séquenceur à un module algorithmique comprend les champs suivants :
- un premier champ macro-commande contenant au moins deux informations, la première information indiquant l'utilisation d'une clé et la longueur de la clé, une deuxième information indiquant la gestion d'un contexte optionnel,
- un deuxième champ indiquant un numéro représentatif de la macro-commande traitée,
- un troisième champ indiquant une première adresse pointant sur une zone mémoire tampon contenant les données nécessaires pour exécuter la macro-commande,
- un quatrième champ indiquant une seconde adresse pointant sur une zone mémoire tampon mise à disposition pour contenir un résultat de l'exécution de la macro-commande,
- un cinquième champ indiquant la longueur des données situées dans la mémoire tampon à chiffrer
- un sixième champ contenant l'adresse de la clé nécessaire au traitement de la macro-commande.

Selon une autre particularité, un bloc de commandes envoyé par le module séquenceur à un module d'interface externe comprend les champs suivants :
- un premier champ commande contenant le numéro de la macro-commande associée,
- un deuxième champ indiquant la longueur des données à transférer vers ou de l'extérieur,
- un troisième champ indiquant une première adresse pointant sur une zone mémoire tampon contenant les données à transférer,
- un quatrième champ indiquant une seconde adresse pointant sur une zone mémoire tampon mise à disposition pour recevoir des données provenant de dispositifs extérieurs au système de cryptographie,

Selon une autre particularité, le mot de statuts comprend au moins un premier champ et un deuxième champ, le premier champ indiquant le numéro de la macro-commande exécutée ou en défaut et le deuxième champ indiquant un code d'erreur représentatif d'un type de défaut survenu lors de l'exécution de la macro-commande.

D'autres particularités et avantages de la présente invention apparaîtront plus clairement à la lecture de la description ci-après, faite en référence aux dessins annexés, dans lesquels :
- la figure 1 montre un schéma représentatif de l'architecture du système cryptographique suivant un mode de réalisation de la présente invention ;
- la figure 2A montre le schéma fonctionnel d'un module algorithmique utilisé dans le système de cryptographie selon la présente invention ;
- la figure 2B montre un schéma représentatif de la structure d'un bloc de commandes d'un module algorithmique, selon le mode de réalisation de la présente invention;
- la figure 2C montre le schéma représentatif d'un mot de statuts envoyé par un module algorithmique ou d'interface externe à un module séquenceur;
- la figure 3A montre un schéma représentatif d'un module mémoire à interface simple du système de cryptographie selon un mode de réalisation de la présente invention ;
- La figure 3B montre un schéma représentatif d'un module mémoire sécurisé à interface double du système de cryptographie selon la présente invention ;
- la figure 4A montre un schéma représentatif d'un module interface externe maître-esclave du système de cryptographie selon un mode de réalisation de la présente invention.
- la figure 4B montre un schéma représentatif de la structure d'un bloc de commandes envoyé par un module séquenceur à un module interface externe du système de cryptographie selon un mode de réalisation de la présente invention ;
- la figure 5 montre un schéma représentatif d'un module séquenceur du système de cryptographie selon un mode de réalisation de la présente invention ;
- la figure 6 montre un schéma représentatif d'un module administration du système de cryptographie selon un mode de réalisation de la présente invention.

L'objet de cette demande de brevet est de proposer une architecture d'un système cryptographique agencé sur une puce intégrée permettant l'implémentation matérielle de protocoles de sécurité à très haut débit et à fort niveau de sécurité en FPGA ou en ASIC en s'affranchissant des inconvénients précités.

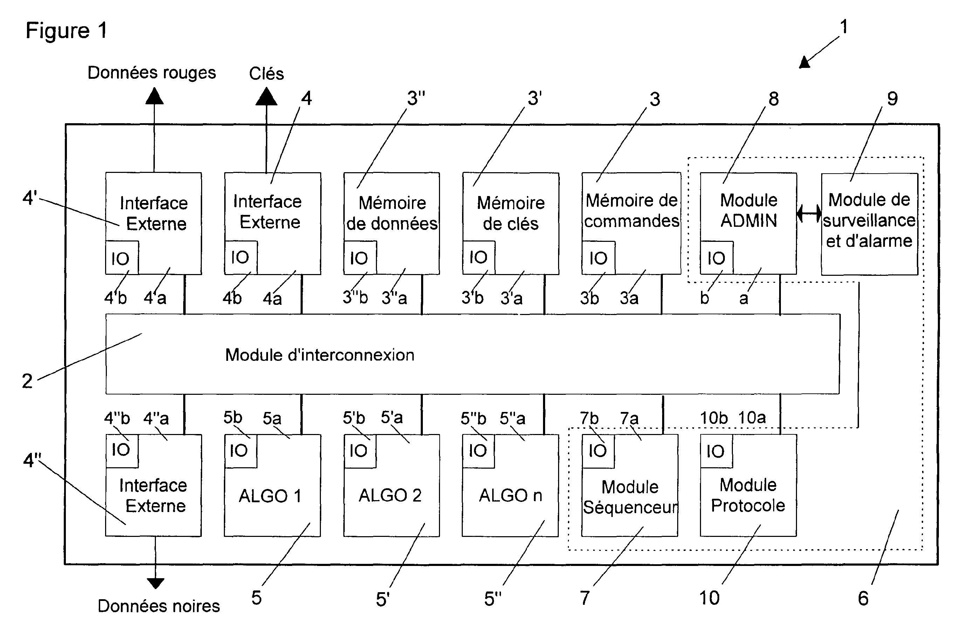

Pour une meilleure compréhension du système cryptographique, il est décrit ci-après le fonctionnement d'un protocole de communication sécuritaire connu IPSEC (Internet Security Protocol). Ce protocole permet d'encapsuler (ou enfermer) des trames IP d'origine dans des trames IP nouvelles crées sous le même protocole, les dite trames nouvelles ayant comme adresses source et destination celles des équipements de chiffrement. Le contenu de chaque trame est en outre chiffré selon un algorithme symétrique connu, toutes les clés de chiffrement étant secrètes, du type 3DES ou AES. L'entête de la trame et son contenu chiffré sont authentifiés au moyen d'un code d'authentification de message (MAC : Message Authentification Code) rajouté à la fin de la nouvelle trame. Le choix des algorithmes de chiffrage, des clés d'authentification et la gestion de l'encapsulation sont les principales fonctions remplies par un module de traitement protocolaire, dit module de protocole. Ce dernier génère à destination de la partie cryptographique d'un système des macro-commandes permettant de réaliser en une seule fois les opérations respectives de génération d'un vecteur de début de chiffrement d'une trame (Initialization Vector), de chiffrement et ou déchiffrement de la trame, de génération et ou vérification du code d'authentification de message. Les macro-commandes en provenance du module de traitement IPSEC sont généralement décomposées, par un séquenceur câblé, en autant de microcommandes cryptographiques nécessaires. L'implémentation complète du protocole IPSEC se fait donc au moyen d'un module de traitement protocolaire interne ou externe au système de cryptographie associé à un séquenceur de commandes cryptographiques câblé, en l'occurrence le module protocole (10) de la figure 1.

Le système cryptographique haut débit à architecture modulaire, objet de la présente invention, sera maintenant décrit de manière plus détaillée en liaison avec la figure 1 et les figures suivantes.

La figure 1 représente une vue d'ensemble de l'architecture du système cryptographique (1) de la présente invention. Ce système (1) est constitué de plusieurs modules ayant chacun leur propre fonction. Ces modules sont présentés dans la suite de la description. La majorité des modules sont constitués de deux sous-modules, un sous-module appelé « coeur » (a) permettant de réaliser la fonction spécifique du module, par exemple la fonction mémoire, la fonction protocole... et un sous-module d'entrée/sortie appelé I/O (b) permettant un échange de données et de commandes avec les autres modules via un module d'interconnexion (2) central appelé cross-bar. Le module d'interconnexion central (2) permet d'assurer des échanges sécurisés entre blocs, tels que le droit d'accès aux mémoires, le partitionnement des chemins. Les modules agencés dans l'architecture du système sont de différents type suivant les besoins du système de cryptographie. Dans le mode de réalisation de la présente invention, représenté en figure 1, le système (1) comprend un module d'interconnexion central (2) des modules mémoires (3, 3', 3"), des modules d'interface externe (4, 4', 4"), des modules algorithmiques (5, 5', 5") et un ensemble de contrôle (6) comportant un module séquenceur (7), un module administrateur (8), un module alarme (9) et un module protocole (10). Ce dernier module peut, toutefois, ne pas être intégré dans le système (1) et être remplacé par un module de traitement protocolaire extérieur connecté à une des interfaces externes (4, 4', 4") du système cryptographique (1). Les modules mémoire (3, 3', 3") implémentent chacun une mémoire particulière par exemple de données (3"), de clés de déchiffrement (3') ou de commandes (3). Le module protocole (10) pouvant être disposé à l'extérieur comme à l'intérieur du système de la présente invention, implémente un protocole de sécurité connu tel que IPSEC, ou SSL ou autre, et génère des macro-commandes cryptographiques vers un module séquenceur (7). Lorsque le module protocole (10) n'est pas implémenté dans le système, mais à l'extérieur de celui-ci, les commandes à destination du module séquenceur (7) sont envoyées via un module d'interface externe (4) au module séquenceur (7). Le module séquenceur (7) décompose les macro-commandes en microcommandes, et assure la distribution et la séparation des différentes commandes cryptographiques vers des modules algorithmiques (5, 5', 5") correspondants. Le module séquenceur (7) reçoit en entrée des commandes cryptographiques en provenance du module administrateur (8) ou du module protocole (10) ou d'un module d'interface de commandes externe (4) s'il n'y a pas de module protocole (10). Les modules algorithmiques (5, 5', 5") traitent les microcommandes et envoient un signal de statut informant le module séquenceur (7) de la fin du traitement. Le module d'administration (8) est chargé de la supervision des différents modules algorithmiques (5, 5', 5") et de la gestion des clés d'authentification. Ledit module implémente des fonctions d'initialisation et de tests par envoi de microcommandes vers le module séquenceur (7) et gère également des interfaces externes (4, 4', 4") dédiées pour le chargement des clés et les fonctions d'initialisation cryptographique telle que la configuration. Le module de surveillance et d'alarme (9) traite toutes les erreurs en provenance des modules algorithmiques (5, 5', 5") des modules mémoires (3, 3', 3") et de l'extérieur. Il génère des signaux d'alarme et des signaux bloquant le module séquenceur (7) et les entrées sorties du système de la présente invention. Ces différents modules, présentés ci-avant, sont décrits de manière plus détaillée dans la suite de la description.

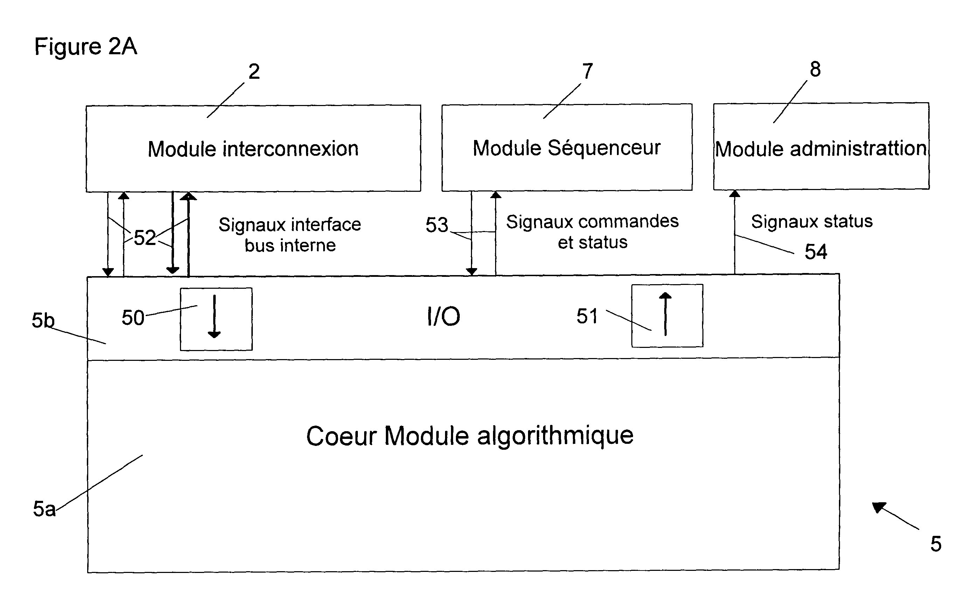

La figure 2A représente le schéma d'un module algorithmique (5) tel que décrit dans la demande de brevet FR n° 2 834 361 intitulée "Architecture d'un composant de chiffrement symétrique", en y ajoutant des caractéristiques supplémentaires spécifiques du système de la présente demande, le ou les modules algorithmiques (5, 5', 5") peuvent être de différents types tels que les modules algorithmiques symétriques, par exemple, 3DES, AES, RC4, les modules algorithmiques hacheurs, par exemple, SHA, MD5, MAC-AES, et les modules algorithmiques asymétriques, par exemple, RSA ,et ECC. Comme pour une grande majorité des modules implémentés dans le système, chaque module algorithmique (5) est constitué d'un sous-module dit « coeur » (5a) correspondant à la fonction spécifique de l'algorithme et d'un sous-module d'entrée/sortie (5b), dit « I/O », permettant de recevoir et de transmettre des informations vers d'autres modules du système. Le sous-module coeur (5a) permet l'implémentation d'un algorithme de chiffrement ou de déchiffrement ou d'authentification. Le sous module I/O (b) comprend un registre d'adresses initialisé par l'adresse de la première commande à exécuter. Le sous-module I/O (b) comprend également une mémoire FIFO (50) d'envoi de données permettant l'écriture de données dans le sous-module coeur et une mémoire FIFO (51 ) de réception de données permettant la lecture de données dans le sous-module coeur (5a). L'attachement du module algorithmique (5, 5', 5") aux différents modules du système de la présente invention se fait à travers trois interfaces (52, 53, 54) représentées ci-après. Une première interface (52) reliée au module d'interconnexion (2) central est utilisée pour les mouvements de données, de commandes et de clés. Les signaux d'interface du bus interne du module d'interconnexion permettent au module algorithmique (5a) de lire et d'écrire dans la mémoire interne ou externe du système de cryptographie selon un protocole bus maître exposé dans la description du module d'interconnexion (2). Une deuxième interface (53) reliée au module séquenceur (7) est utilisée pour le démarrage et l'initialisation des commandes exécutées par le module algorithmique (5). Les signaux d'interface allant vers et venant du module séquenceur (7) sont utilisés par le module séquenceur (7) pour sa fonction de distribution des commandes. Une troisième interface (54) reliée au module administrateur (8) est utilisée pour le traitement des erreurs. Les signaux d'interface vers le module administrateur (8) sont utilisés pour remonter les erreurs et mettre en action la gestion de la sécurité du système de la présente invention décrite dans la suite de la description. Le module administrateur (8) fait ensuite appel au module de surveillance et d'alarme (9) pour gérer les anomalies détectées. Chaque module algorithmique (5) travaille sous le contrôle du module séquenceur (7) en mode d'accès direct mémoire (dma, direct memory acces). Le module séquenceur (7) charge au-préalable dans le module mémoire de commandes (3) du système de cryptographie (1) des blocs de commandes à exécuter par les modules algorithmiques. Puis le module séquenceur (7) procède à l'initialisation d'un module algorithmique (5) en communiquant à ce dernier l'adresse de la zone mémoire de commandes qui lui est destinée. Le module séquenceur (7) envoie un signal d'initialisation comprenant par exemple l'adresse mémoire localisée dans la mémoire de commandes dans laquelle le bloc de commandes qui lui est destiné est mémorisé. Cette adresse est chargée dans le registre d'adresses du module algorithmique (5). Chaque commande comprend un mot de contrôle spécifique de l'algorithme implémenté dans le module, les adresses d'entrée et de sortie des mémoires tampon de données et la taille de ces mémoires tampons, un pointeur définissant l'adresse de la clé mémorisée dans la mémoire de clé du système et éventuellement un pointeur vers une zone mémoire de contexte optionnel ou vers un vecteur d'initialisation. Ces caractéristiques sont présentées dans la suite de la description. Le module séquenceur (7) active un signal de commande à destination du module algorithmique (5) en question. Le sous-module I/O (b) du module algorithmique (5) va chercher par le biais de l'interface bus interne du module d'interconnexion (2) dans les différents modules mémoires (3, 3', 3") la commande, les données et la clé utilisées. Lors de la fin de l'exécution de la commande, le sous-module I/O (5b) du module algorithmique (5) prévient le module séquenceur (7) de la fin de l'opération en lui envoyant un mot de statuts (56). Ce mot de statuts permet par son contenu d'informer le module séquenceur (7) du résultat de l'exécution d'une fonction spécifique, par exemple, la vérification du code d'authentification du message (MAC), en lui indiquant si le résultat est bon ou mauvais. De même, dès qu'une anomalie est détectée par le module algorithmique (5) au cours de l'exécution d'une commande, le sous-module I/O (5b) envoie au module administrateur (8) le mot de statuts (56) lui indiquant par un contenu différent un statut d'erreur.

Une des caractéristiques additionnelles d'un module algorithmique (5), de la présente invention, consiste en ce que la partie I/O du module comprend un moyen de gestion de plusieurs files de commandes en mémoire si nécessaire, afin de permettre une gestion plus fine du parallélisme des différents modules algorithmiques (5, 5', 5") lorsque ceux-ci possèdent des débits différents. Par exemple un module de chiffrement à 1 Gbits/s associé à deux modules de calcul de MAC d'un débit de 500 Mbits/s chacun. Le module de chiffrement peut alors, grâce aux deux files de commandes, être vu comme deux modules virtuels de 500 Mbits/s chacun.

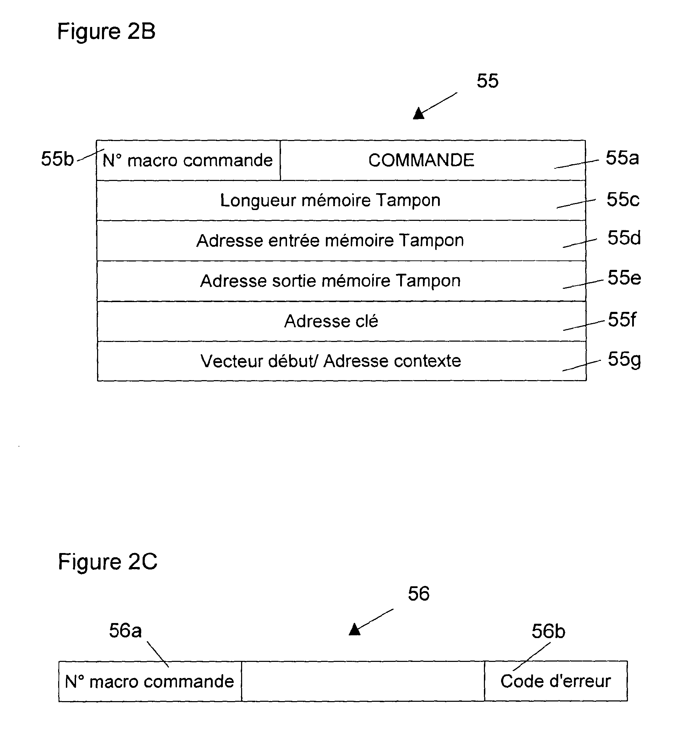

La figure 2B représente la structure d'un bloc de commandes (55) chargé par le module séquenceur (7) dans le module mémoire de commandes (3) du système (1), le bloc de commandes étant destiné à un des modules algorithmiques (5, 5', 5"). Un bloc de commandes comprend plusieurs champs distincts, chaque champ comprenant un mot de 32 bits. Un premier champ (55a), le champ commande, est spécifique du type d'algorithme utilisé pour exécuter une macro-commande spécifique, par exemple l'algorithme de chiffrement / déchiffrement ou l'algorithme de calcul d'un MAC. Ce champ contient au moins deux informations, une première information sur l'utilisation d'une clé et la longueur de celle-ci, et une deuxième information concernant la gestion ou non d'un contexte optionnel. Le contexte est constitué par l'ensemble des paramètres pertinents de l'algorithme qui doivent être sauvegardés entre chaque commande lorsque ces commandes s'appliquent à des mémoires tampon de données chaînées. C'est le cas par exemple, lorsqu'une mémoire tampon de données est trop grande pour être traitée par une seule commande et doit être scindée en plusieurs mémoires tampon de tailles plus petites. Ces mémoires tampons sont dites de données chaînées. Le chiffrement exécuté par le module algorithmique (5) doit alors reprendre à l'endroit précis où il s'était arrêté lors de la mémoire tampon précédente même si, entre temps, le module algorithmique (5) a du exécuter une commande pour une autre mémoire tampon. Un deuxième champ (55b) du bloc de commandes correspond à un numéro de macro-commande associé. Ce numéro est recopié dans le mot statut (56) renvoyé au module séquenceur (7) en fin d'exécution et permet à celui-ci d'identifier la macro-commande traitée. Un troisième champ (55c) contient la taille de la mémoire tampon à chiffrer. Un quatrième champ (55d) correspond à l'adresse pointant sur la mémoire de données pour écrire le résultat de la macro-commande exécutée par l'algorithme. Un cinquième champ (55e) correspond à l'adresse pointant sur la zone mémoire de données contenant les données nécessaires pour exécuter la macro-commande, ladite zone mémoire est lue par le module algorithmique (5). Un sixième champ (55f) contient l'adresse de la clé de chiffrement ou d'authentification (MAC). Les clés se trouvent dans une mémoire sécurisée de clés distincte des données. Une mémoire sécurisée est une mémoire dont le câblage ou les moyens de contrôle la rendent inaccessible de l'extérieur en lecture ou en écriture, sauf par une autorité. Seul les moyens de traitement du circuit intégré peuvent lire les clés mais celles-ci ne sont pas utilisables de l'extérieur du circuit intégré et ne peuvent servir en interne qu'au chiffrement ou au déchiffrement.

La figure 2C montre un schéma représentatif d'un mot de statuts renvoyé par le module algorithmique (5) vers le module séquenceur (7) ou vers le module administrateur (8) à la fin d'exécution d'une commande. Dans un mode de réalisation de la présente invention ce mot de statuts peut contenir 32 bits. Ce mot de statuts (56) est envoyé vers le module séquenceur (7) lorsque le résultat de l'opération exécutée par le module algorithmique (5) est bon ou mauvais sans qu'il y ait erreur de fonctionnement du module en question. Par exemple lors de la vérification d'un MAC associé à un message, le résultat bon ou mauvais doit être transmis au niveau protocolaire (IPSEC). Le mot de statuts est envoyé vers le module administrateur (8) lorsque le module algorithmique a détecté une erreur au cours du traitement de l'opération. Celui-ci positionne un signal vers le module d'alarme (9) et envoie dans le même temps un mot de statuts (56) au module administrateur (8) pour traçabilité. Le mot de statuts (56) comprend un champ (56a) numéro de macro-commande permettant au module séquenceur (7) de remonter l'information au module de traitement de protocole (10). Le mot de statuts (56) comprend également un code d'erreurs (56b) dépendant du type de module et des possibilités d'erreurs associées. Les erreurs peuvent être, par exemple, une erreur dans le champ commande, une erreur de longueur, une erreur d'adresse.

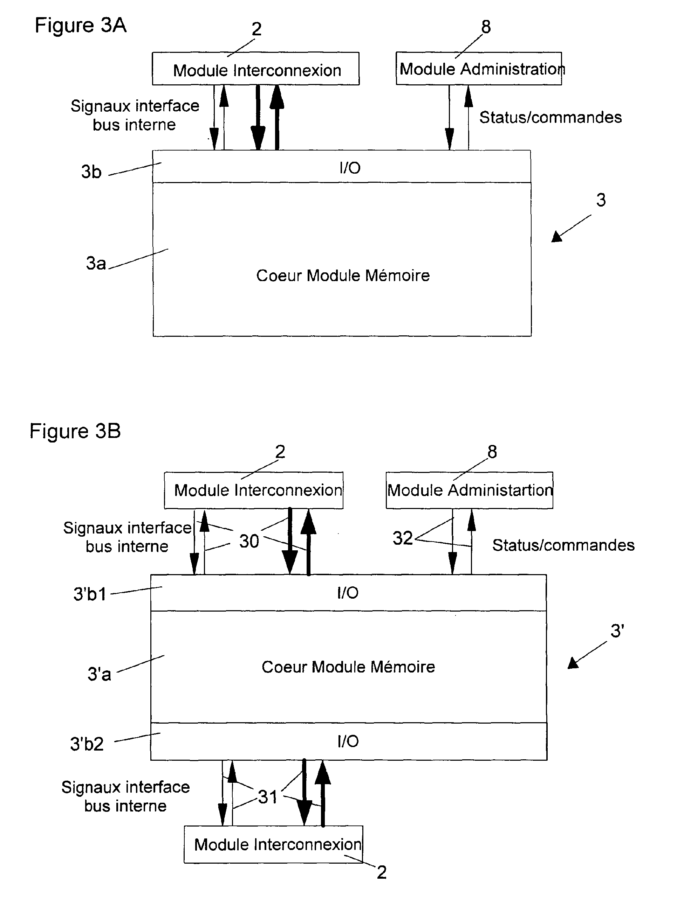

Les figures 3A et 3B représentent les schémas représentatifs de modules mémoires (3, 3', 3") implémentés dans le système cryptographique (1) de la présente invention. Les modules mémoires (3, 3', 3") comprennent un sous-module coeur (3a, 3'a) permettant de stocker les données commandes et clés du système et un sous module d'entrée sortie ou d'interface I/O (3b, 3'b1 et 3'b2) permettant l'interfaçage du module mémoire avec le module d'interconnexion (2). Le sous-module I/O peut comporter une interface simple port (3b), comme représentée en figure 3A ou une interface double port (3'b1 et 3'b2) comme représentée en figure 3B. La mémoire présente dans le système est séparée en plusieurs modules selon les types d'informations stockées telles que les commandes, les données ou les clés. Le niveau de sécurité requis est le cloisonnement entre données claires, dites données rouges et données chiffrées, dites données noires. Lorsque le module mémoire (3') est à interface double, comme représenté en figure 3B, il possède deux attachements au bus interne du module d'interconnexion (2). L'interface du sous-module I/O (3'b1 ou 3'b2) du module mémoire (3') permettant le raccordement au module d'interconnexion (2) est du type esclave. Ainsi le groupe de signaux échangés entre les deux modules permet de réaliser une lecture ou une écriture simple ou par paquets dans la mémoire. Dans le cas d'un module mémoire (3') sécurisé, il faut ajouter à l'interface (3'b1 ou 3'b2) du sous-module I/O des signaux d'échange avec le module administrateur (8) permettant ainsi de remonter vers le module d'alarme (9) un statut d'erreur d'intégrité lors d'une lecture de clé et de générer sur ordre du module alarme un effacement de l'ensemble de la mémoire. Le système de cryptographie (1), selon un mode de réalisation de la présente invention, comporte cinq types de modules mémoires (3, 3', 3") :
- un module mémoire de données rouges est constitué par une mémoire à interface double. Cette mémoire contient les données en clair avant cryptage ;
- un module mémoire de données noires est constitué par une mémoire à interface double. Cette mémoire contient les données chiffrées après cryptage ;
- un module mémoire de commandes de chiffrement contient toutes les commandes correspondant aux modules algorithmiques (5, 5', 5") de chiffrement et de génération de MAC. Sa taille typique dépend du nombre de modules implémentés et de la taille des blocs de commandes ;
- un module mémoire de commandes de déchiffrement contient toutes les commandes correspondant aux modules algorithmiques (5, 5', 5") de déchiffrement et de vérification de MAC. Sa taille typique dépend du nombre de modules implémentés et de la taille des blocs de commandes ;
- un module mémoire de clés (3') à interface double contient toutes les clés utilisées par les modules algorithmiques (5, 5', 5") de chiffrement et d'authentification. Ce dernier module mémoire est sécurisé et comprend donc en plus deux blocs logiques supplémentaires. Un premier bloc, dit bloc de contrôle d'intégrité, contrôle sur chaque accès à cette mémoire une valeur d'intégrité associée à la clé. En cas d'erreur, un statut est généré à destination du module alarme (9). Un deuxième bloc de remise à zéro effectue un effacement complet de la mémoire par ré-écriture à toutes les adresses au moyen d'un compteur. Cette fonction est activée sur réception d'une commande en provenance du module alarme (9). La taille typique d'un tel module est fonction du nombre de clés mises en oeuvre et de la taille de chaque clé.

Chacune des mémoires précédentes est de préférence du type interface double (3') et permet donc d'avoir deux attachements au bus interne du module d'interconnexion (2). De ce fait, la bande passante disponible pour les transferts de données est beaucoup plus importante.

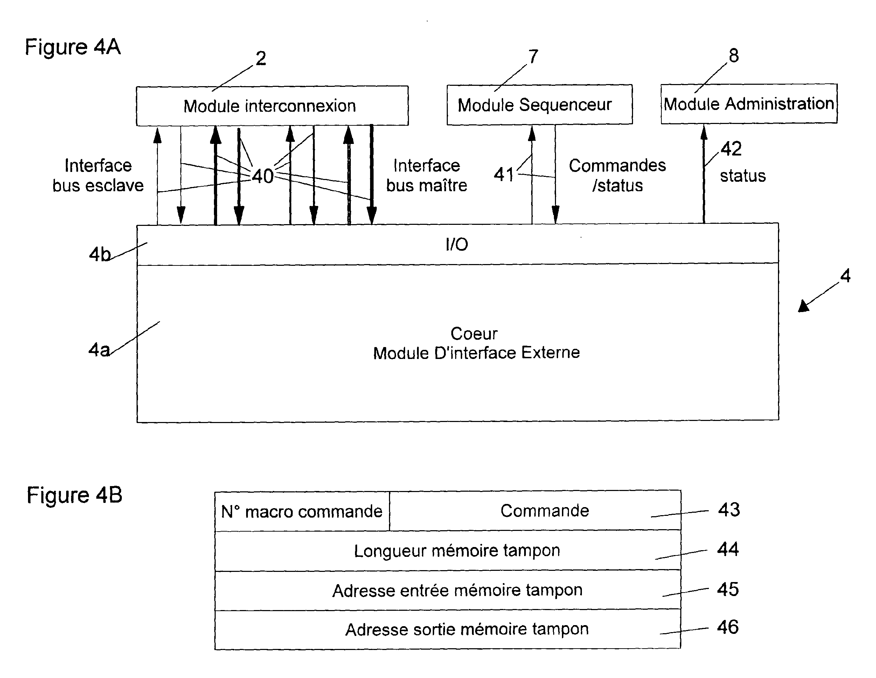

En référence à la figure 1, le système de cryptographie comprend selon un mode de réalisation de la présente invention, différents modules d'interface externe (4). Ces modules sont chargés d'interfacer le système de cryptographie (1) modulaire de la présente invention avec le monde extérieur. Le monde extérieur peut, par exemple, comprendre un processeur de traitement des interfaces réseau, des mémoires de données de type DRAM, des mémoires spécialisées de type CAMs, SRAM rapides. Si le module protocole n'est pas intégré au système de cryptographie, un composant de traitement protocolaire, tel que le protocole IPSEC, peut également être interfacé au système. Les modules d'interfaces externes (4, 4', 4") doivent donc pouvoir s'adapter au plus grand nombre possible de protocoles d'échanges. Certains protocoles d'échanges réalisant la connexion à un processeur, telles que les interfaces PCI, SPI-3, SPI-4, Hypertransport, RapidIO, bus processeur spécifique, sont des protocoles externes esclaves. Les protocoles d'échanges réalisant la connexion à des mémoires de type DDR,QDR,CAM's,SRAM, sont des protocoles externes maîtres. Les protocoles réalisant la connexion à des composants spécifiques comme les composants de type FPGA, ASIC, sont des protocoles externes maître-esclave. Certains modules d'interfaces externes (4, 4', 4") fonctionnent en mode maître ou esclave ou les deux à la fois. Lorsque les transferts s'effectuent en mode maître, le module d'interface externe comporte deux canaux d'accès direct à la mémoire, chaque canal étant destiné à un sens de transfert. En se référant à la figure 4a, le module d'interface externe (4) générique comprend deux sous-modules. Un sous-module exécuteur (4a), dit "coeur", est chargé d'implémenter le protocole d'échange spécifique de l'interface choisie, par exemple PCI. Un sous-module d'entrée/sortie I/O (4b) est chargé d'interfacer le protocole d'échange particulier avec le module d'interconnexion (2) du système de cryptographie (1). Le sous-module I/O (4b) peut comporter des canaux d'accès directs mémoire et s'interface dans ce cas avec le module séquenceur (2). Le sous-module I/O (4b) peut aussi reporter des statuts d'erreurs vers le module alarme (9) comme n'importe quel sous-module du module algorithmique (5). Le sous-module I/O (4b) permet d'assurer les différents modes d'échange selon le type de protocole externe interfacé. Pour un protocole externe esclave, par exemple un processeur externe écrit ou lit dans le système cryptographique, le sous-module I/O (4b) est alors du type maître simple, c'est-à-dire sans accès direct à la mémoire. Dans ce cas, le sous-module I/O (4b) comporte un décodeur d'adresse qui permet à un maître externe, par exemple un processeur ou un ASIC, d'accéder à certains modules internes du système cryptographique (1).

Pour un protocole externe maître, par exemple une interface mémoire, le sous-module I/O (4b) est alors du type esclave ou maître avec des accès directs mémoire. Dans ce cas, le sous-module I/O (4b) comporte simplement une mémoire FIFO d'envoi de données vers l'extérieur et une mémoire FIFO de réception de données. Ces mémoires permettent à un module interne au système (1), par exemple le module protocole (10), d'accéder à une mémoire externe en faisant des écritures/lectures via le bus interne du module d'interconnexion (2).

Pour un protocole externe maître-esclave, par exemple une interface PCI, le sous-module I/O (4b) est alors du type maître simple et esclave ou maître avec des accès directs mémoire. Un module d'interface externe (4) maître avec des accès directs mémoire permet au système cryptographique (1) de transférer les données à traiter directement entre les mémoires externes et les mémoires internes du système (1). Le sous-module I/O (4b) maître avec accès direct en mémoire est identique au sous-module I/O (5b) des modules algorithmiques (5, 5', 5"). Les accès directs en mémoire sont pilotés par le module séquenceur (7) par l'envoi de blocs de commandes. La figure 4B représente le schéma d'un bloc de commandes envoyé par le module séquenceur (7) destiné à un module d'interface externe (4), pour lancer une opération d'accès direct en mémoire sur un module d'interface externe (4). Le module séquenceur (7) poste à destination d'une mémoire dans le module mémoire de commandes (3) un bloc de commandes de quatre mots de 32 bits. Le premier champ (43), le champ commande, comporte uniquement le numéro de la macro-commande associée à l'opération d'accès direct en mémoire. Le deuxième champ (44), le champ longueur de la mémoire tampon, indique le nombre de mots de 32 bits à transférer. Le troisième champ (45) indique une adresse pointant sur une zone de mémoire tampon comprenant les données à transférer. Le quatrième champ (46) indique une adresse pointant sur une zone de la mémoire tampon destinée à recevoir les données venant de l'extérieur. Il y a en principe deux canaux d'accès directs mémoire, un par sens de transfert.

En référence à la figure 1, le module d'interconnexion (2) dit cross bar d'interconnexion permet de connecter les différents modules du système de cryptographie (1) entre eux. Ce module d'interconnexion (2) est constitué par une série de multiplexeurs de données et d'adresses permettant à chaque module maître d'accéder au module esclave de son choix. Contrairement à un bus standard de connexion, les accès du module d'interconnexion (2) s'effectuent concurremment pour l'ensemble des modules. Les principaux modules maîtres du système sont les modules algorithmiques (5, 5', 5"), le module protocole (10), le module administrateur (8) et certains modules d'interface externe (4). Les principaux modules esclaves sont les modules mémoires internes (3, 3', 3") . Les principaux modules maîtres-esclaves sont le module séquenceur (7) et certains modules interface externe (4).

Le module d'interconnexion (2) comporte aussi différents modules d'arbitrage permettant de résoudre les conflits d'accès simultanés de plusieurs maîtres vers un même esclave. L'arbitrage s'effectue selon une priorité tournante classique. Le module cross-bar comprend autant d'arbitres locaux qu'il y a de modules esclaves à accès partagé entre plusieurs maîtres. Le moyen d'interconnexion (2) implémente des mécanismes de sécurité spécifiques afin de garantir que seules les modules algorithmiques (5, 5', 5") autorisés accèdent aux données qu'ils doivent traiter. Certaines fonctions de sécurité incombent au module d'interconnexion (2). Le module d'interconnexion (2) garantit par câblage que seuls les chemins autorisés sont implantés. Par exemple s'il ne doit pas y avoir de chemin entre le module protocole (10) et le module mémoire de clés (3) ou entre le module administrateur (8) et les modules mémoire de données (3), ces chemins ne seront pas réalisés. Le module d'interconnexion (2) garantit que les modules algorithmiques (5, 5', 5") n'accèdent pas aux modules mémoires (3, 3', 3") dans un autre mode que celui autorisé. Par exemple, si un module de chiffrement ne doit accéder à la mémoire de données rouge qu'en lecture, toute tentative d'écriture dans cette mémoire depuis ce module activera le signal d'erreur du module d'interconnexion. Il est ainsi possible d'implémenter des droits d'accès de certains modules maîtres vers les seuls modules esclaves autorisés. Le module d'interconnexion garantit les accès des modules de chiffrement et d'authentification vers les clés dédiées situées en mémoire sécurisée. Chaque clé possède un mot de contrôle qui définit son type tel que la clé de chiffrement, la clé de déchiffrement, la clé de génération d'authentification et la clé de vérification d'authentification. Ce mot est ensuite vérifié par le module d'interconnexion lors de l'accès en lecture à cette mémoire. Si un module algorithmique (5) de chiffrement essaie d'accéder à une clé de déchiffrement ou d'authentification, le module d'interconnexion (2) génère aussitôt une erreur à destination du module alarme (9). Le module d'interconnexion (2) permet d'augmenter le niveau de parallélisme et la performance de l'ensemble du système de cryptographie (1). Les interfaces esclaves de type FIFO permettent de poster plusieurs demandes de lecture vers une mémoire externe et de récupérer ultérieurement les données correspondantes sans pénalité pour la bande passante interne. La largeur des bus de données du module d'interconnexion (2) est variable selon le type de module. Elle est, en général, comprise entre 32 bits et 64 bits. Un module quelconque peut avoir plusieurs attachements maîtres ou esclaves afin d'augmenter le niveau de parallélisme et la performance de l'ensemble.

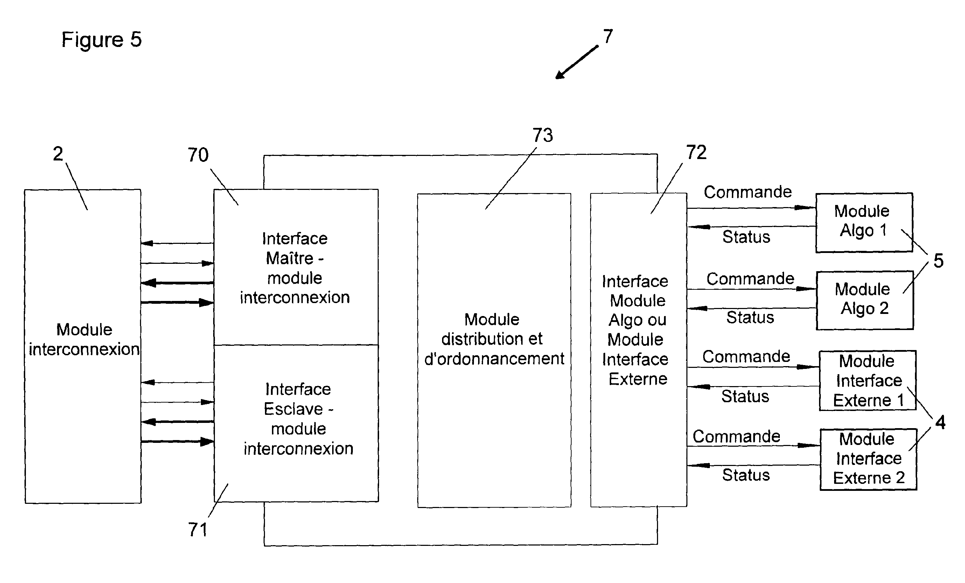

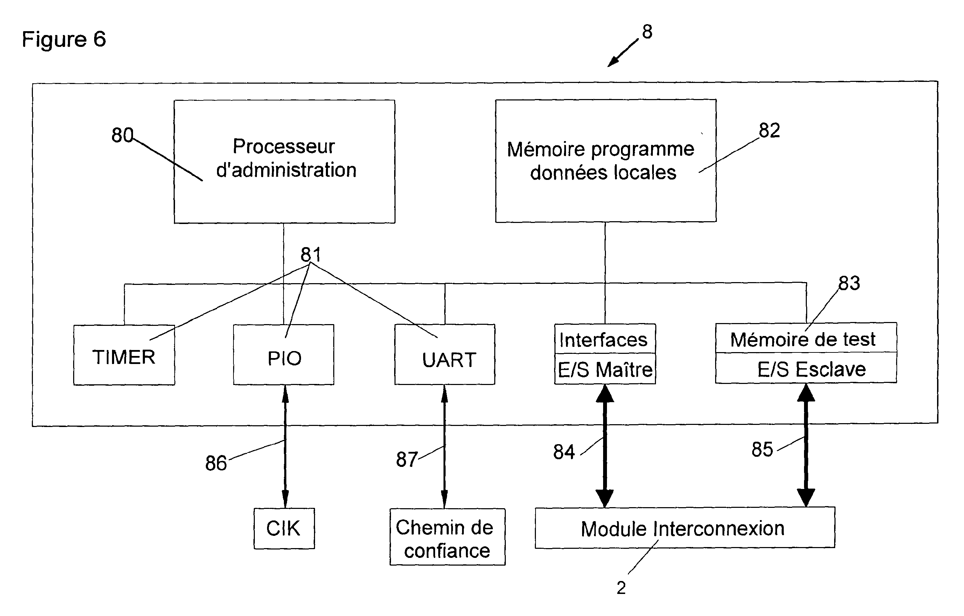

La figure 6 représente un module séquenceur (7) implémenté dans le système cryptographique (1) de la présente invention. Le module séquenceur (1) joue le rôle de chef d'orchestre de la partie cryptographique du système. C'est lui qui reçoit les macro-commandes ou les commandes, en provenance du module protocole (10) situé à l'intérieur ou à l'extérieur du système cryptographique, respectivement en provenance du module administrateur (8). Le module séquenceur (7) fabrique et distribue les microcommandes cryptographiques vers les modules algorithmiques (5, 5', 5") et les modules d'interfaces externes (4, 4', 4") correspondants. Le module séquenceur (7) alloue et répartit la charge de travail entre les différents modules. Il garantit l'ordonnancement des commandes et délivre au module protocole (10) ou au module administrateur (8), un statut de fin de commande ou d'erreur. En se référant à la figure 5, le module séquenceur (7) comprend trois interfaces. Une première interface (70) est une interface maître de 32 bits qui est reliée au module d'interconnexion (2). Cette interface (70) est utilisée pour renvoyer les statuts de fin de commande vers les modules initiateurs tels que le module protocole (10) et le module administrateur (8). Une deuxième interface (71) est une interface esclave de 32 bits reliée au module d'interconnexion (2). Cette interface (71) est utilisée par les modules initiateurs pour envoyer au module séquenceur (7) les macro-commandes ou les commandes de test à exécuter. Elle est également utilisée pour recevoir les statuts de fin d'opération envoyés par certains modules, par exemple module interface externe (4). Une troisième interface (72) est reliée vers les modules de traitement algorithmiques (5, 5', 5") et les modules d'interfaces externes (4, 4', 4") avec un accès direct mémoire.

Un même module algorithmique (5) peut être amené à multiplexer plusieurs files de commandes afin de faciliter la tâche d'ordonnancement du module séquenceur (7) sans qu'il soit nécessaire ou souhaitable d'augmenter le nombre de modules. Les signaux de contrôles ou de statuts sont, dans ce cas, doublés ou triplés pour tenir compte de l'existence de plusieurs files.

Le module séquenceur comprend un moyen de distribuer les commandes (73) qui décompose chaque macro-commande en microcommandes de chiffrement et/ou de découpage et envoie celles-ci vers les modules mémoires de commandes (3) du système cryptographique (1). Ainsi une macro-commande IPSEC de chiffrement peut-être décomposée en un certain nombre de micro commandes telles qu'une commande d'accès direct mémoire (DMA) à destination d'un module d'interface externe (4), une commande de génération d'aléa (Random Number Generator, RNG) pour un vecteur d'initialisation, une commande de chiffrement (CHIF). Le module séquenceur (7) comporte un moyen d'ordonnancement des commandes. Ce moyen lance les modules algorithmiques (5, 5', 5") dans l'ordre requis pour la bonne exécution de la macro-commande correspondante. Un exemple d'ordonnancement de commandes vous est présenté ci-dessous :
1. START DMA in
   END DMA in
2. START RNG
   END RNG
3. START CHIF

La commande START envoyée par le module séquenceur (7) à un module algorithmique est activée par le moyen d'ordonnancement sur réception du statut de fin END du module algorithmique (5) ou d'interface externe (4) précédent. Chaque commande START incrémente un compteur de commandes spécifique du module algorithmique (5) ou d'interface externe (4) en question. Ce compteur est décrémenté par un statut de fin de commande END en provenance du même module. Tant que ce compteur de commandes n'est pas nul, le module en question reste actif. Ce mode de fonctionnement en continu est connu et a déjà été utilisé dans l'environnement microprocesseur de cartes PCA protégées par le brevet FR 2 834 361. Lorsque les modules, exécutant des opérations, sont implémentés en nombre non homogène dans le système, par exemple quatre modules de chiffrement et un seul module d'interface externe, la tâche du moyen d'ordonnancement est facilitée en multiplexant plusieurs files de commandes sur un module unique, de manière à gérer quatre files de commandes indépendantes. Ainsi le module unique, dans le cas présent le module d'interface externe (4), se comporte alors, en ce qui concerne ses entrées-sorties, comme quatre modules virtuels indépendants.

Le module séquenceur (7) décrit permet donc de répondre à deux exigences. La première exigence est la mise en oeuvre importante du parallélisme entre les différents modules pour satisfaire au critère de performance du système de la présente invention. La deuxième exigence est d'offrir au module de traitement protocolaire une interface type macro-commandes pouvant s'adapter de manière souple à différents types de protocoles et masquant les détails de la partie purement cryptographique

Le module protocole (10) permet d'implémenter un protocole de sécurité comme le protocole IPSEC présenté en début de description. Le module protocole (10) peut être situé à l'intérieur ou à l'extérieur du système de cryptographie (1). Le module protocole (10) comprend un ou plusieurs sous-modules de traitement tels que des machines d'état dans le cas d'une implémentation purement câblée ou d'un processeur associé à une mémoire de programme dans le cas d'une implémentation micro-logicielle. Ce module de protocole (10) comprend également un ou plusieurs sous-modules d'interface reliés au bus interne du module d'interconnexion, quand ledit module est compris dans l'ensemble de contrôle (6) du système (1), les sous-modules d'interface ayant pour mission d'assurer les accès vers les mémoires internes et externes du système de cryptographie (1) ainsi que les accès vers le module séquenceur (7). Du nombre de sous-modules d'interface du module protocole (10) dépend le niveau de parallélisme que l'on peut atteindre. Ainsi le module protocole (10) reçoit des données en provenance des modules d'interfaces externes (4, 4', 4"), effectue l'analyse syntaxique et protocolaire de celles-ci et construit les macro-commandes à destination du module séquenceur (7). Chaque macro-commande contient les informations nécessaires pour la partie cryptographique telles que les clés à utiliser, les pointeurs vers les mémoires tampon de données, les types d'algorithmes. Il n'a ainsi pas à se préoccuper directement de la gestion des modules algorithmiques (5, 5', 5") qui sont pris en charge par le module séquenceur (7).

La figure 6 montre un schéma représentatif du module administrateur (8) compris dans l'ensemble de contrôle du système de la présente invention. Ce module comprend un processeur administrateur (80) associé à des circuits périphériques standards (81) de types UART, TIMERS et PIO. Le programme exécuté par le processeur administrateur (80) se trouve dans une mémoire interne (82) au système. Le module administrateur (8) comprend également une mémoire de test (83) permettant au module de réaliser des tests continus des algorithmes sans interférer avec les mémoires de données et de clés. Le module administrateur (8) comprend également une interface maître (85) et une interface esclave (84) reliées au module d'interconnexion (2). L'interface maître (85) permet d'envoyer au module séquenceur (7) les commandes de tests à exécuter et de recevoir les statuts d'anomalies de certains modules du système de cryptographie (1). L'interface esclave (84) permet de recevoir les statuts de fin de commande des commandes de tests exécutés par les modules algorithmiques et envoyés par le module séquenceur (7). Les rôles dévolus à ce module au sein du système de la présente invention sont multiples. Un de ces rôles consiste à initialiser la mémoire de clés interne au démarrage du système et à lire les clés chiffrées dans une mémoire externe ou à travers une liaison externe dédiée puis à déchiffrer ces clés et à les ranger dans la mémoire interne. C'est le seul module du système autorisé à écrire dans la mémoire sécurisée de clés interne. Un autre rôle du module administrateur (8) est de tester le fonctionnement des modules internes. Ces tests ont lieu à chaque mise sous tension et également en continu afin de s'assurer de l'intégrité des algorithmes implémentés. Le module administrateur (8) permet également de gérer une interface externe (86) telle qu'une interface série ou à micro-circuit, réalisant le support d'une fonction d'injection de clés et d'une fonction d'authentification. Le module administrateur gère une liaison externe (87) dédiée au passage de données sensibles. Cette liaison externe est également appelée chemin de confiance. Le module administrateur (8) permet d'initialiser certaines mémoires externes associées au traitement protocolaire connu de type CAMs et SRAMs. Le module administrateur (8) permet la récupération des statuts d'erreur en provenance des modules algoritmiques (5).

En référence à la figure 1, on constate que le module de surveillance et d'alarme (9) est un des seuls modules du système comprenant un seul sous-module, le sous-module coeur. Ce module communique uniquement avec le module administrateur (8). Le rôle du module de surveillance et d'alarme est de centraliser tous les signaux d'erreur via le module administrateur (8), en provenance des autres modules et de gérer en conséquence la politique de sécurité mise en oeuvre par le système de la présente invention. Un signal d'erreur est activé chaque fois qu'un module algorithmique (5) détecte une erreur dans la commande qu'il va lire en mémoire. Un signal d'erreur est activé par le module mémoire (3) sécurisé lors de la détection d'une erreur de transmission de clé ou d'attaque d'un virus. Un signal d'erreur est activé par le module d'interconnexion (2) lors d'une détection de violation d'accès. Un signal d'erreur est activé par le module administrateur (8) lors de la détection d'une erreur dans les tests internes. Un signal d'erreur est activé de l'extérieur par un composant externe, par exemple un processeur pilotant les interfaces réseaux. A ces signaux d'erreur il faut ajouter des signaux de sécurité externes divers, tels qu'un signal de remise à zéro d'urgence activé par un mécanisme de type bouton d'arrêt d'urgence et un signal de détection d'intrusion de l'équipement. Le module de surveillance et d'alarme (9) génère des signaux permettant la remise à zéro des mémoires sécurisées. Ces signaux sont envoyés vers les modules mémoires (3, 3', 3") sécurisées pour commander la remise à zéro des contenus sensibles. Le module de surveillance et d'alarme (9) génère également des signaux destinés à bloquer les parties sensibles du système telles que le module séquenceur (7), le module d'interface externe (4), en cas de survenue d'un incident majeur tel qu'une erreur ou une remise à zéro d'urgence, selon la politique de sécurité mise en oeuvre par le système.

L'architecture modulaire du système de cryptographie de la présente invention propose une modularité entre les parties cryptographiques et les parties protocoles, la partie protocole pouvant se situer à l'extérieur comme à l'intérieur du système de cryptographie (1). L'architecture du système de la présente invention propose également une modularité des interfaces de communication, le support des différents standards d'interface se faisant sans modification de l'architecture et sans impacte sur les parties cryptographiques et protocoles. Le système obtient un niveau de performance élevé grâce à un parallélisme massif des blocs algorithmiques (5, 5', 5"), une multiplicité de mémoires et un module séquenceur (7) de commandes câblé. Le système propose également un très haut niveau de sécurité obtenu par l'implémentation des différents modules administrateur (8), de surveillance et d'alarme (9), du module d'interconnexion (2) et des modules mémoires (3, 3', 3") Le module administrateur (8) est chargé de la sûreté de fonctionnement des différents modules algorithmiques (5, 5', 5") et de la gestion des clés. Le module de surveillance et d'alarme (9) est chargé de traiter les différents cas d'erreurs et d'activer les fonctions de sécurité essentielles telles que la réinitialisation des mémoires de clé, le blocage des entrées sorties. Le module d'interconnexion (2) est capable d'assurer les échanges sécurisés entre blocs avec des droits d'accès aux mémoires, des séparations des chemins. Le module mémoire sécurisé contient les clés avec contrôle d'intégrité et fonction d'effacement d'urgence.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système cryptographique (1) à architecture modulaire, **caractérisé en ce qu'**il comprend :
- des modules mémoires (3, 3', 3") (3 )permettant de stocker des informations portant sur des clés d'authentification, des données et des commandes, dont un module mémoire sécurisé (3') pour contenir les clés avec contrôle d'intégrité et fonction d'effacement d'urgence,
- différents types demodules algorithmiques (5, 5', 5") réalisant des fonctions de cryptographie du système cryptographique en exécutant les commandes stockées dans au moins un module mémoire (3),
- des modules d'interface externe (4) permettant d'effectuer la liaison entre le système cryptographique (1) et des dispositifs extérieurs, par un bus d'entrée sortie standard ou propriétaire,
- un ensemble de contrôle (6) chargé de la supervision des différents modules algorithmiques et de la gestion des clés,
- un module d'interconnexion central (2) capable d'assurer des échanges sécurisés entre blocs, permettant de connecter entre eux, les modules algorithmique (5), les modules mémoire (3), les modules d'interface externe (4) et l'ensemble de contrôle (6).

2. Système cryptographique (1) à architecture modulaire, selon la revendication 1, **caractérisé en ce que** l'ensemble de contrôle (6) comprend :
- un module séquenceur réalisant des fonctions de distribution et d'ordonnancement de commandes en stockant lesdites commandes dans au moins un module mémoire (3), en lançant l'exécution des modules algorithmiques (5, 5', 5") et des modules d'interface externe (4, 4', 4") via un bloc de commandes (55) et en recevant un mot de statuts (56) indiquant la fin d'exécution desdits modules algorithmiques (5, 5', 5") et modules d'interface externe (4, 4', 4"),
- un module administrateur (8) permettant de surveiller les modules du système, d'envoyer des commandes de tests vers le module séquenceur (7) et de recevoir un mot de statuts (56) indiquant un défaut survenu dans le système cryptographique (1),
- un module de surveillance et d'alarme (9) relié au module administrateur (8) permettant de traiter des anomalies en provenance des autres modules du système cryptographique et d'activer les fonctions de sécurités essentielles,

3. Système cryptographique (1) à architecture modulaire, selon la revendication 1 ou 2, **caractérisé en ce qu'**un module protocole (10) est intégré ou non dans le système cryptographique (1), ledit module protocole (10) étant relié au module d'interconnexion central (2) ou à au moins un module d'interface externe (4, 4', 4"), le dit module protocole (10) permet d'implémenter un protocole de sécurité en envoyant des macro-commandes de cryptographie au module séquenceur (7).

4. Système cryptographique (1) à architecture modulaire, selon une des revendications 1 à 3, **caractérisé en ce que** les principaux modules maîtres du système cryptographique (1) sont le module protocole (10), le module administrateur (8), les module algorithmiques (5, 5', 5") et certains modules d'interfaces externes (4, 4'), les principaux modules esclaves sont les modules mémoire (3, 3', 3") et **en ce que** les principaux modules maîtres-esclaves sont le module séquenceur (7) et certains modules d'interface externe (4").

5. Système cryptographique (1) à architecture modulaire, selon une des revendications 1 à 4, **caractérisé en ce que** chaque module algorithmique (5) comprend un sous-module (5a) exécutant des commandes de chiffrement ou déchiffrement ou de génération de code d'authentification ou vérification de code d'authentification, et un sous-module d'entrée sortie (5b) comportant au moins une première interface (52), une deuxième interface (53) et une troisième interface (54), la première interface (52) étant reliée au bus interne du module d'interconnexion central (2) pour la transmission de données, de clés et de commandes provenant des modules mémoire (3), la deuxième interface (53) étant reliée par accès direct mémoire au module séquenceur (7) pour recevoir un signal de lancement d'exécution d'une commande cryptographique et pour envoyer un mot de statuts (56) indiquant la fin d'exécution de la commande cryptographique, la troisième interface (54) étant reliée au module administrateur (8) pour envoyer un mot de statuts (56) indiquant qu'une anomalie est survenue lors de l'exécution d'une commande cryptographique.

6. Système cryptographique (1) à architecture modulaire, selon une des revendications 1 à 5, **caractérisé en ce que** le sous-module d'entrée sortie (5b) d'un module algorithmique (5) comprend un registre d'adresses, une mémoire FIFO (50) d'envoi de données, un mémoire FIFO (51) de réception de données et un moyen de gestion de plusieurs files de commandes en mémoire permettant une gestion plus fine du parallélisme d'exécution des modules algorithmiques (5), lesdits modules possédant des débits de transmission différents.

7. Système cryptographique (1) à architecture modulaire, selon une des revendications 1 à 6, **caractérisé en ce que** le système cryptographique comprend au moins les modules mémoire (3, 3', 3") suivant :
- un module mémoire de données claires contenant des données avant cryptage,
- un module mémoire de données cryptées contenant des données après cryptage,
- un module mémoire de commandes de chiffrement contenant les commandes correspondant aux modules algorithmiques (5, 5', 5") de chiffrement et de génération de code d'authentification,
- un module mémoire de commandes de déchiffrement contenant les commandes correspondant aux modules algorithmiques (5, 5', 5") de déchiffrement et de vérification de code d'authentification,
- un module mémoire sécurisé de clé (3') contenant des clés utilisées par les modules algorithmiques (5, 5', 5") de chiffrement et de génération de code d'authentification.

8. Système cryptographique (1) à architecture modulaire, selon une des revendications 1 à 7, **caractérisé en ce que** chaque module mémoire (3) comprend un sous-module (3a) de stockage d'informations, et un sous-module d'entrée sortie (3b), ledit sous-module d'entrée-sortie (3b) étant raccordé au bus interne du module d'interconnexion central (2) par une interface de type esclave permettant une écriture et une lecture simple ou par paquets dans le module mémoire (3).

9. Système cryptographique (1) à architecture modulaire, selon une des revendications 1 à 8, **caractérisé en ce que** le sous-module d'entrée sortie d'un module mémoire est à interface simple port.

10. Système cryptographique (1) à architecture modulaire, selon une des revendications 1 à 8, **caractérisé en ce que** le sous-module d'entrée sortie (3'b1, 3'b2) d'un module mémoire est à interface double port permettant deux attachements (30-31) au bus interne du module d'interconnexion central (2), un premier (30) attachement dédié à la transmission des données claires et un deuxième attachement (31) dédié à la transmission des données chiffrées.

11. Système cryptographique (1) à architecture modulaire, selon une des revendications 1 à 10, **caractérisé en ce que** le sous-module d'entrée sortie (3'b1', 3'b2) d'un module mémoire (3') sécurisé comprend deux blocs logiques, un premier bloc de contrôle d'intégrité contrôlant à chaque accès au module mémoire une valeur d'intégrité associée à une clé, en cas d'erreur d'intégrité ledit bloc envoi vers le module de surveillance et d'alarme (9) un mot de statuts (56) précisant l'erreur et un deuxième bloc de remise à zéro effectuant un effacement complet du module mémoire (3') par ré-écriture de toutes les adresses au moyen d'un compteur, l'effacement étant commandé par le module de surveillance et d'alarme (9) lors de la réception d'un mot statut (56) indiquant une erreur d'intégrité.

12. Système cryptographique (1) à architecture modulaire, selon une des revendications 1 à 11, **caractérisé en ce qu'**un module d'interface externe (4) comprend un sous-module (4a) implémentant un protocole d'échange et un sous-module d'entrée sortie (4b) pouvant fonctionner soit en mode maître, soit en mode esclave, soit en mode maître-esclave suivant le mode du protocole d'échange, permettant ainsi au système cryptographique (1) de pouvoir s'adapter à tout type de protocole de sécurité.

13. Système cryptographique (1) à architecture modulaire, selon une des revendications 1 à 12, **caractérisé en ce que** le module séquenceur (7) comprend un moyen de distribution de commandes (73), ledit moyen permettant de décomposer en microcommandes chaque macro-commande cryptographique provenant du module protocole (10), chacune des microcommandes comprenant un algorithme cryptographique simple et de poster les microcommandes dans un module mémoire (3) de commandes à destination des autres modules, et **en ce que** le module séquenceur (7) comprend une première interface (70) de type maître reliée au module d'interconnexion central (2) pour envoyer un mot de statuts (56) de fin d'exécution vers le module protocole (10) ou le module administrateur (8), une deuxième interface (71) de type esclave reliée au module d'interconnexion central (2) pour recevoir des macro-commandes envoyées par le module protocole (10) ou des commandes de test envoyées par le module d'administration (8), et pour recevoir des mots de statuts (56) indiquant la fin d'exécution de commandes envoyées par les modules algorithmiques (5, 5', 5") et les modules d'interface externe (4), et une troisième interface (72) en mode accès direct mémoire, reliée aux modules algorithmiques (5, 5', 5") et aux modules d'interface externe (4) pour lancer l'exécution desdits modules en leur envoyant un bloc de commandes (55-43), et **en ce que** le module séquenceur (7) comprend un moyen d'ordonnancement des commandes permettant de lancer les modules algorithmiques (5, 5', 5") et les modules d'interface externe (4) dans un ordre défini.

14. Système cryptographique (1) à architecture modulaire, selon une des revendications 1 à 13, **caractérisé en ce que** le module administrateur (8) comprend un processeur administrateur (80), des circuits périphériques (81), une mémoire interne (82) contenant le programme exécuté par le processeur administrateur (80), une mémoire de test (83) permettant de réaliser des commandes de test sur les modules algorithmiques (5, 5', 5") ou les modules d'interface externe (4, 4', 4"), une interface maître (84) reliée au module d'interconnexion central (2) permettant d'envoyer des commandes de tests au module séquenceur (7) et de recevoir des mots de statuts (56) indiquant des modules en défaut, une interface esclave (85) permettant de recevoir des mots de statuts (56) envoyés par le module séquenceur (7) pour indiquer la fin d'une commande de test exécutée par un module algorithmique (5) ou un module d'interface externe (4, 4', 4"), et une liaison externe (87) dédiée au passage des données sensibles venant de dispositifs extérieurs au système cryptographique (1).

15. Système cryptographique (1) à architecture modulaire, selon une des revendications 1 à 14, **caractérisé en ce que** le module administrateur (8) initialise un module mémoire sécurisé de clé (3') du système cryptographique (1) au démarrage dudit système cryptographique (1), lit des clés chiffrées dans une mémoire d'un dispositif externe ou à travers une liaison externe dédiée, puis déchiffre lesdits clés chiffrées et les écrit dans le module mémoire sécurisé de clé (3') du système cryptographique (1).

16. Système cryptographique (1) à architecture modulaire, selon une des revendications 1 à 15, **caractérisé en ce que** le module d'interconnexion central (2) comprend une série de multiplexeurs de données et d'adresses permettant aux modules du système cryptographique (1) d'accéder à d'autres modules du dit système, des sous-modules d'arbitrage évitant des conflits d'accès simultanés entre modules et des mécanismes de sécurité garantissant les droits d'accès entre modules, les accès dudit module d'interconnexion central s'effectuant concurremment pour l'ensemble des modules du système cryptographique (1).

17. Système cryptographique (1) à architecture modulaire, selon une des revendications 1 à 16, **caractérisé en ce que** le module d'interconnexion central (2) garantit l'accès en lecture des modules algorithmiques (5, 5', 5") de chiffrement et de génération de code d'authentification vers un module mémoire sécurisé de clé (3'), par vérification d'un mot de contrôle représentatif de l'utilisation de chaque clé, et **en ce que** dès la détection d'une erreur le module d'interconnexion central (2) envoie un mot d'erreur (56) au module de surveillance et d'alarme (9).

18. Système cryptographique (1) à architecture modulaire, selon une des revendications 1 à 17, **caractérisé en ce qu'**un bloc de commandes (55) envoyé par le module séquenceur (7) à un module algorithmique (5) comprend les champs suivants :
- un premier champ (55a) macro-commande contenant au moins deux informations, la première information indiquant l'utilisation d'une clé et la longueur de la clé, une deuxième information indiquant la gestion d'un contexte optionnel,
- un deuxième champ (55b) indiquant un numéro représentatif de la macro-commande traitée,
- un troisième champ (55c) indiquant la longueur des données situées dans la mémoire tampon à chiffrer
- un quatrième champ (55d) indiquant une seconde adresse pointant sur une zone mémoire tampon mise à disposition pour contenir un résultat de l'exécution de la macro-commande,
- un cinquième champ (55e) indiquant une première adresse pointant sur une zone mémoire tampon contenant les données nécessaires pour exécuter la macro-commande,
- un sixième champ (55f) contenant l'adresse de la clé nécessaire au traitement de la macro-commande.

19. Système cryptographique (1) à architecture modulaire, selon une des revendications 1 à 18, **caractérisé en ce qu'**un bloc de commandes (43) envoyé par le module séquenceur (7) à un module d'interface externe (4) comprend les champs suivants :
- un premier champ (43) commande contenant le numéro de la macro-commande associée,
- un deuxième champ (44) indiquant la longueur des données à transférer vers ou de l'extérieur,
- un troisième champ (45) indiquant une première adresse pointant sur une zone mémoire tampon contenant les données à transférer,
- un quatrième champ (46) indiquant une seconde adresse pointant sur une zone mémoire tampon mise à disposition pour recevoir des données provenant de dispositifs extérieurs au système cryptographique (1),

20. Système cryptographique (1) à architecture modulaire, selon une des revendications 1 à 19, **caractérisé en ce que** le mot de statuts (56) comprend au moins un premier champ (56a) et un deuxième champ (56b), le premier champ (56a) indiquant le numéro de la macro-commande exécutée ou en défaut et le deuxième champ (56b) indiquant un code d'erreur représentatif d'un type de défaut survenu lors de l'exécution de la macro-commande.
